# EUROPÄISCHE PATENTSCHRIFT

(11) **EP 4 308 320 B1**
(45) Veröffentlichungstag und Bekanntmachung des Hinweises auf die Patenterteilung: **24.06.2026**
(21) Anmeldenummer: 22715037.2
(22) Anmeldetag: 15.03.2022
(51) Int. Cl.: B21C 37/12, B21C 37/15, B23K 9/04, B23K 26/342, B23K 31/02, F28F 1/40, F28F 1/42, F28F 19/06, B23P 15/26

(54) **VERFAHREN ZUR HERSTELLUNG VON ROHREN MIT TOPOGRAPHISCHEN INNENSTRUKTUREN**
METHOD FOR PRODUCING PIPES HAVING TOPOGRAPHIC INNER STRUCTURES
PROCÉDÉ DE FABRICATION DE TUYAUX DOTÉS DE STRUCTURES INTERNES TOPOGRAPHIQUES

(30) Priorität: 16.03.2021 DE 102021106305
(43) Veröffentlichungstag der Anmeldung: 24.01.2024
(73) Patentinhaber: Karlsruher Institut für Technologie, 76131 Karlsruhe (DE)
(72) Erfinder: NEUBERGER, Heiko, 76351 Linkenheim (DE); ARBEITER, Frederik, 76137 Karlsruhe (DE); RUCK, Sebastian, 76137 Karlsruhe (DE)
(86) Internationale Anmeldenummer: PCT/EP2022/056668
(87) Internationale Veröffentlichungsnummer: WO 2022/194851

(56) Entgegenhaltungen:
- CA-A1- 2 193 933
- CN-A- 106 794 561
- DE-A1- 2 227 955
- JP-A- S59 164 889
- JP-B2- 6 836 887

## Beschreibung

Verfahren zur Herstellung eines Rohres, vorzugsweise aus Metall, weiter bevorzugt eines Wärmetauschrohrs oder -Rohrelements, mit an der Innenwandung angeordneten topgraphischen Strukturen sowie ein Rohr hergestellt mit dem Verfahren.

Die eingangs genannten Rohre sind in der Regel aus Metall. Sie dienen insbesondere der Durchleitung von Fluiden wie z.B. Flüssigkeiten und/oder Gasen, aber auch Suspensionen, Emulsionen, Aerosole oder Flüssigkeitsgemische (im Folgenden auch Arbeitsfluid genannt) durch einen Wärmetauscher, eine Brennkammer, einen Rauchgasabzug oder eine andere Wärme aufnehmendes oder abgebendes Vorrichtung oder Medium. Üblicherweise bilden die Rohrwandungen der Rohre zumindest abschnittsweise die Wärmeaustauschflächen des Wärmetauschers, wobei man grundsätzlich bestrebt ist, die Oberflächen zugunsten einer guten Wärmeanbindung an das jeweils angrenzende Medium wie das vorgenannte Fluid zu gestalten. An den Außenflächen bieten es sich hierfür angesetzte oder eingeformte Kühlrippen oder Fluidführungselemente an, um eine möglichst intensive Anströmung durch ein Wärmeübertragungsmedium oder Anbindung von Strahlungswärme anzustreben. Im Innern sind herkömmliche zylindrische Rohre dagegen meist glatt oder unstrukturiert, insbesondere fertigungsbedingt bei kleinen Rohrinnendurchmessern. Es ist auch allgemein bekannt, dass für eine bessere thermische Anbindung der Wärmeaustauschflächen an das durchgeleitete Fluid deren spezifische Kontaktoberfläche vergrößert wird. Beispielsweise wird dies meist durch eine Aufzweigung des Durchströmungsquerschnitts auf mehrere Einzelrohre mit kleinerem Durchmesser umgesetzt.

Auf der anderen Seite sind Rohre mit strukturierten Innenwandungsflächen bekannt. Beispielsweise kommen in der Kälte/Klima-Industrie umlaufende geometrische Strukturen ähnlich des Profils der Innenseite eines Gewehrlaufes zum Einsatz. Drallrohre werden in Wärmetauschern von Kraftwerken eingesetzt; auch sie besitzen eine unebene Innenoberfläche. Die Strukturierung dient der turbulenzsteigernden Beeinflussung der Strömung durch das Rohr in der Weise, dass die isolierende Strömungsgrenzschicht an den Innenwandungsflächen reduziert wird.

Der Einsatz von Oberflächenstrukturen wie beispielsweise Rippen, Dimples und Pins auf Wärmetauscheroberflächen führt zu einer erhöhten Wärmeübertragung zwischen Arbeitsfluid und Komponentenwand und ist eine bewährte Methode hohe Wärmestromdichten und hohe Arbeitsfluidtemperaturen unter Einhaltung komponentenspezifischer Maximaltemperaturen in thermisch hochbelasteten Bauteilen zu realisieren. Je nach Art der vorliegenden thermischen Randbedingungen an der Wärme abgebenden oder aufnehmenden Wand führt eine verbesserte Wärmeübertragung zu einer Reduktion der Komponentenmaterialtemperatur oder ermöglicht eine schnellere Zunahme der adiabaten Mischungstemperatur des Arbeitsfluids in Hauptströmungsrichtung. Somit lässt sich die Komponentenlebensdauer verlängern, der thermische Anlagenwirkungsgrad steigern, die Wärmeübertragungsflächen reduzieren oder eine höhere Lastflexibilität der Komponente realisieren.

Trotz zusätzlicher Druck- und Reibungsverlusten (bei gleichem Massenstrom des Arbeitsfluids in Kanälen mit strukturierten Oberflächen, kann das Verhältnis von Wärmeübertragung zu benötigter Pumpleistung gesteigert werden. Hierbei spielt insbesondere die Konfiguration der Oberflächenstrukturen eine entscheidende Rolle. Rippenstrukturen zeichnen sich gegenüber anderen Oberflächenstrukturierungen durch eine sehr hohe Wärmeübertragung aus. Rippenstrukturen finden bereits Anwendung in Solarreceiver, in gasgekühlten Reaktorkomponenten, oder in luftgekühlten Gasturbinenschaufeln von konventionellen Gaskraftwerken. Hierbei werden die innendurchströmten Komponenten als Gußteil aus Einmalformen oder als Schweißkonstruktion bestehend aus mehreren Bauteilen hergestellt, auch additive Fertigungsverfahren finden zunehmend Anwendung.

Ferner beschreiben Ruck S., Arbeiter F.: Thermal Performance Augmentation by Rib-Arrays for Helium-gascooled First Wall Applications; Fusion Engineering and Design 124 (2017) S.306-310**,** Flügelstrukturen für eine verbesserte Wärmeübertagung in einem Kanal, der nach der Applikation verschlossen wird. Die Besonderheit an den sog. Semi-detached V-Ribs ist, dass diese nur an einer Stelle (z.B. in der Flügelmitte) mit der Kanalwand fest verbunden sind. Zwischen den Flügeln und der Kanalwand befindet sich ein Spalt mit einer Höhe von z.B. 0,1 mm, der bei einer Durchströmung des Kanals mit durchströmt wird. Der Effekt der bisher angewendeten Rohrinnenstrukturen kann dadurch noch gesteigert werden indem eine großskalige Vermischung über die Grenzschicht an der Rohrwand hinaus erreicht wird.

Eine fertigungstechnische Umsetzung von komplexen strukturierten Oberflächen (insbesondere Flügelstrukturen wie Semi-detached V-Ribs, sich lokal ändernde Strukturen z.B. von Dimples zu Ribs oder beliebige Kombinationen daraus) innerhalb von Rohrleitungen der vorgenannten Art erfordert die Zugänglichkeit der Rohrinnenwand, z.B. mit einem Werkzeug zur mechanischen oder elektrochemischen Bearbeitung, einem fokussierten Energiestrahl (Laserstrukturieren) oder einer Vorrichtung (z.B. zum Positionieren und Fügen von z.B. Strömungsleitblechen).

Eine Innenbearbeitung von vorgenannten Rohren ist jedoch mit zunehmender Rohrlänge und mit abnehmenden Rohrdurchmesser zunehmend aufwendig, wenn nicht ab einem gewissen Grad nicht mehr mit vertretbaren Aufwand durchführbar. Wesentlich ist die Zugänglichkeit zur Bearbeitung der Rohrinnenfläche, was mit sinkendem Rohrdurchmesser (typische Größenordnung z.B. in Rohrbündelwärmetauschern liegen im Bereich von wenigen cm) zunehmend schwieriger ist.

Die CA 2 193 933 A1 beschreibt ein Verfahren zur Herstellung eines Rohrs, wobei die topographischen Strukturen gleichzeitig mit der Umformung der Rohrschalensegmente aufgebracht werden. Die Schalen werden mittels Stumpflöten verbunden.

Davon ausgehend liegt eine **Aufgabe** der Erfindung darin, ein Verfahren zur Herstellung von Rohren mit insbesondere komplexen Innenstrukturen vorzuschlagen, das die vorgenannten Einschränkungen in der Durchführbarkeit nicht aufweist.

Eine weitere Aufgabe liegt darin, ein Rohr, insbesondere ein Wärmetauschrohr, mit Innenstrukturen vorzuschlagen, mit dem vorgenannten Verfahren hergestellt.

Die Aufgabe wird mit einem Verfahren und einem Rohr mit den Merkmalen gemäß dem ersten bzw. dem zwölften Patentanspruch gelöst. Auf diese rückbezogene Unteransprüche geben vorteilhafte Ausgestaltungen wieder.

Zur Lösung der Aufgabe wird ein mehrschichtiger Aufbau des Rohres vorgesehen. Das Innenrohr ist dabei vorzugsweise vollständig durch mehrere, vorzugsweise zwei oder drei separate Rohrschalensegmente zusammengesetzt, wobei diese sich an deren Stoßflächen bündig berühren und so Stoßlinien bilden. Die Innenstrukturen werden zuvor auf den Innenflächen der Rohrschalensegmente aufgebracht, wobei die Rohrschalensegmente schon beim Auf- oder Einbringen der topographischen Strukturen auf der Innenwandung bereits endkonturnah so vorgeformt vorliegen, dass sie ohne weitere Verformung zum Innenrohr an den Stoßflächen aneinander setzbar sind.

Durch die Aufteilung des Innenrohrs in separate Rohrschalensegmente wird die Innenwandung für eine Einbringung einer Strukturierung besser zugänglich. Durch deren bevorzugte endkonturnahe Vorverformung wird eine weitere Verformung der strukturierten Innenwandung und damit eine mögliche Belastung, Verformung oder Beschädigung der Strukturen bis zu Integration in das Innenrohr vermieden oder zumindest signifikant reduziert. Dies kommt insbesondere einer Realisierung von filigranen und/oder zusammengesetzten Strukturen sehr entgegen. Die Rohrschalensegmente werden vorzugsweise durch rinnenförmige Segmente gebildet, bei denen mehrere dieser Segmente axial parallel zueinander angeordnet zum Innenrohr oder einem Innenrohrabschnitt zusammensetzbar sind. Alternativ oder ergänzend sind die Rohrschalensegmente durch kurze ringförmige Innenrohrabschnitte bildbar, die dann axial seriell zueinander angeordnet zum Innenrohr oder einem Innenrohrabschnitt zusammensetzbar sind.

Dieses durch die Rohrschalensegmente gebildete Innenrohr wird nach dem Zusammensetzen von außen auf der Außenwandung der Rohrschalensegmente mit einer zweiten Schicht, einer Beschichtung aus einem metallischen Material, über die Stoßlinien und Stoßflächen der Rohrschalensegmenten hinweg beschichtet, wobei ein zusammenhängender Rohrkörper entsteht und dieser über die Stoßflächen trotz möglicher Spalten, Fertigungstoleranzen oder Fehlstellungen hinweg geschlossen ist. Die Beschichtung erfolgt mittels additivem Aufbringen, zur Vermeidung von herstellungsbedingten Spannungszuständen und zur Reduzierung thermisch bedingter Degradation der Innenstrukturen bevorzugt bei Temperaturen unterhalb 500°C, weiter bevorzugt unterhalb 350°C. Spalte und Fehlerquellen werden durch die Beschichtung ausgefüllt und ausgeglichen.

Der Umfang des Innenrohrs erstreckt sich in jeder axialen Position des Innenrohrquerschnitts stets vorzugsweise über mindestens zwei Rohrschalensegmente. Ebenso liegt eine Ausgestaltung im Rahmen der Erfindung, bei der das Rohr auch axial in mehrere Rohrschalensegmente aufgeteilt wird, wobei die Stoßflächen zwischen diesen Rohrschalensegmenten axial und/oder in Umfangsrichtung vorzugsweise versetzt zueinander angeordnet sind. Entsprechend sind die Stoßlinien am Innenrohr axial und/oder in Umfangsrichtung orientiert, wobei die Stoßlinien nicht zwingend geradlinig ausgerichtet sind.

Die Lösung der Aufgabe umfasst folglich ein **Verfahren** zur Herstellung eines Rohrs mit einem Innenrohr mit innen angeordneten topgraphischen Strukturen und mit einer außen angeordneten Beschichtung, umfassend die folgenden Verfahrensschritte:
a) In einem ersten Schritt erfolgt eine Bereitstellung von mindestens zwei Rohrschalensegmenten der vorgenannten Art mit jeweils einer Innenwandung und einer Außenwandung, die passgenau zu dem Innenrohr aneinander setzbar sind. Das Innenrohr wird dann vorzugsweise nur durch die zusammengesetzten Rohrschalensegmente gebildet.
   Das Herstellen der Schalensegmente erfolgt vorzugsweise mittels Urform-, Umform-, Abtrags- oder Trennverfahren.
   Beim Urformen werden die Rohrschalensegmente bereits mit Semi-detached Ribs oder anderen Strukturen z.B. mittels Spritzgießen hergestellt. Vorteilhaft ist das Urformen insbesondere bei großer Stückzahl, wobei in Einzelfällen eine verfahrensbedingte Einschränkung bei der Werkstoffauswahl hingenommen werden muss.
   Beim Trennen/Umformen werden die Rohrschalensegmente vorzugsweise aus Blech-coils ausgestanzt und entsprechend umgeformt. Einfache Oberflächenstrukturen können ggf. dabei mit eingeprägt werden. Jedoch sind die Möglichkeit bei der Herstellung insbesondere von punktuell angebundenen Elementen wie z.B. Flügel oder Leitbleche begrenzt und erfordern ggf. weitere Verfahrenssschritte, z.B. mittels Fügen.
   Auch Laser- Plasma- oder Wasserstrahlschnieden kann zur Herstellung von Schalensegmenten angewendet werden, besonders wenn als Halbzeuge für Schalen- oder Ringsegmente nahtlose Rohre verwendet werden. Auch hier sind die Optionen zur direkten Einbringung von Flügel oder Leitblechen begrenzt und erfordern ggf. weitere Verfahrenssschritte.
b) Es folgt sofern nicht fertigungsbedingt bereits in Verfahrensschritt a) integriert ein Auf- oder Einbringen der topographischen Strukturen auf der Innenwandung der Rohrschalensegmente. Dies erfolgt vorzugsweise mittels Füge-, Abtrags- oder Beschichtungsverfahren.
   Beim Fügen werden beispielsweise die vorgenannten Flügelstrukturen punktuell gefügt, vorzugsweise geschweißt oder genietet (Fügen durch Umformen).
   Ein Abtragsverfahren umfasst spangebende oder nicht spangebende Verfahren, die für eine Einarbeitung von Strukturen in die Innenwandung heranziehbar sind. Beispielsweise können Innenstrukturen an den Rohrschalensegmenten durch Erodieren, Laserstrukturieren, Fräsen usw. eingebracht werden. Abtragsverfahren sind jedoch weniger für die Herstellung der Semi-detached Ribs geeignet.
c) Es erfolgt ein Aneinandersetzen der Rohrschalensegmente über ihre Stoßflächen zu dem Innenrohr unter Bildung der vorgenannten Stoßlinien. Dabei bilden die Rohrschalensegmente vorzugsweise das gesamte Innenrohr aus, wobei sie mit ihren Rändern, d.h. ihren Stoßflächen vorzugsweise überlappungsfrei aneinander liegen und die Stoßlinien bilden. Im Rahmen einer bevorzugten Ausgestaltung liegen die Rohrschalensegmente dabei formschlüssig wie zueinander passende Puzzleteile aneinander an, was wiederum eine entsprechende geometrische Ausgestaltung der Rohrschalenelemente in deren Randbereichen und damit Stoßflächen erfordert. Im Rahmen einer bevorzugten alternativen Ausgestaltung weisen die Stoßflächen zwischen zwei Rohrschalenelemente formschlüssige Führungselemente oder Überlappungsbereiche zu benachbarten Stoßflächen auf und bewirken auf diese Weise ein formschlüssiges aneinanderlegen der Rohrschalenelemente.
d) Es folgt eine Fixierung der im Innenrohr eingebundenen Rohrschalensegmente durch Ansetzen von Fixierungsmitteln, vorzugsweise um das Innenrohr umlaufende Schellen. Die Fixierung erfolgt vorzugsweise zumindest jeweils an den Endbereichen des Rohrs und/oder im Falle einer axial seriellen Aufreihung mehrerer Rohrschalensegmente, die entsprechenden umlaufenden Stoßlinien überbrückend. Wird das Innenrohr wie zuvor ausgeführt durch mehrere axial seriell aufgereihte kurze ringförmige Innenrohrabschnitte als Rohrschalensegmente gebildet oder ist eine axiale Einspannung der Rohrsegmente im Innenrohr erforderlich, umfasst das hierzu erforderliche Fixierungsmittel einen durch das Innenrohr geführte Zuganker mit Aufnahmeelementen für die Innenrohrenden.
e) Anschließend wird ein additives Aufbringen der Beschichtung aus einem metallischen Material auf der Außenwandung der Rohrschalensegmente über die Stoßflächen hinweg zu einem zusammenhängenden Rohrkörper vorgeschlagen. Das additive Aufbringen erfolgt vorzugsweise mittels eines Auftragsschweißverfahren, wobei das metallische Material in Pulveroder Drahtform bereitgestellt wird und durch eine Wärmequelle, vorzugsweise einem Energiestrahl oder einer Lichtbogenentladung geschmolzen wird. Damit entsteht eine durchgängige Beschichtung auf dem durch die Stoßlinien weiterhin unterteilten Innenrohr, wobei der vorgenannte Energiestrahl und/oder Lichtbogenentladung die Stoßflächen mit erwärmt und ggf. einen Diffusionsschweißprozess in Gang setzt. Eine alternative Ausgestaltung sieht ein Aufbringen der Beschichtung mittels Kaltgasspritzen oder thermisches Spritzen vor, wobei das metallische Material in Pulverform bereitgestellt wird. Kaltgasspritzen erfolgt in besonders vorteilhafter Weise bei Temperaturen unter 400°C, weiter bevorzugt unter 300°C, d.h. bei Prozesstemperaturen, die die Rohrschalensegmente und die Strukturen praktisch unbeeinflusst lässt.
   Vorzugsweise wird insbesondere dann eine Verfahrenserweiterung vorgeschlagen, wenn die Fixierungselemente über Bereiche der Außenwandungen der Rohrschalensegmente angesetzt sind und diese Bereiche damit überdecken. Diese überdeckten Bereiche auf der Außenwandung der Rohrschalensegmente werden beim vorgenannten additiven Aufbringen der Beschichtung aus einem metallischen Material nicht beschichtet. Wenn diese Fixierungselemente nicht in der Beschichtung eingebunden sind und da auch verbleiben sollen, wird eine nachfolgende Nachbearbeitung vorgeschlagen, umfassend die nachfolgenden Verfahrensschritte:
f) Entfernung der Fixierungsmittel, wobei die bis dahin überdeckten Bereiche der Außenwandungen freigegeben werden.
g) Additives Aufbringen des metallischen Material in den vorgenannten Bereichen der Außenwandungen, die bei einer Entfernung der Fixierungsmittel freigelegt werden, als Teil der Beschichtung. Vorzugsweise erfolgt dies mit demselben oder dem gleichen metallischen Beschichtungsmaterial und dem gleichen Beschichtungsverfahren.

Die vorgenannte Beschichtung auf dem Innenrohr wird vorzugsweise anschließend thermisch und/oder mechanisch nachbearbeitet.

Eine thermische Nachbearbeitung dient einerseits der Reduzierung der Eigenspannungen in der Beschichtung, die insbesondere bei Beschichtungsverfahren bei Temperaturen deutlich unterhalb der Schmelztemperatur und deutlich unter der für eine Diffusionsumlagerung erforderliche Temperatur (Sintertemperatur) des metallischen Beschichtungsmaterials (vorzugsweise kleiner 50% der Schmelztemperatur in K, vorzugsweise kleiner 500°C, weiter bevorzugt kleiner 350°C) zu erwarten ist, insbesondere bei einem Kaltgasspritzen. Die Temperierung erfolgt vorzugsweise bei Temperaturen zwischen der Sintertemperatur und der Schmelztemperatur des metallischen Materials.

Eine mechanische Nachbearbeitung dient insbesondere der Einstellung einer vorgebbaren äußeren Geometrie der Mantelfläche des zusammenhängenden Rohrkörpers durch Materialabtrag auf der Beschichtung. Vorzugsweise umfasst diese Nachbearbeitung mittels spangebenden Überarbeiten, vorzugsweise durch ein Überdrehen oder Überschleifen, der Beschichtung, wobei weiter eine rotationssymmetrische konzentrisch zum Rohr angeordnete Beschichtungsoberfläche entsteht.

Eine bearbeitete Beschichtungsoberfläche weist gegenüber einer unbearbeiteten Beschichtungsoberfläche vorzugsweise eine glattere und gleichmäßigere Oberfläche auf. Vorzugsweise ist diese auch konzentrisch zum Innenrohr angeordnet, sodass die Beschichtung eine näherungsweise gleiche Schichtdicke über der Außenfläche des Innenrohrs aufweist. Hiermit allein werden schon in vorteilhafter Weise von der Beschichtungsoberfläche ausgehende Kerbwirkungen sowie Spannungssingularitäten in der Beschichtung reduziert.

Vorzugsweise ist dieser mechanischen Bearbeitung noch eine thermische Nachbearbeitung vorausgegen, vorzugsweise mit bekannten Vorgehen und Parametern eines Spannungsarmglühens oder einer weiteren diffusionsumlagerungsbehafteten Nachverdichtung der Beschichtung.

Alternativ oder optional dient die vorgenannte mechanisch bearbeitete Beschichtungsoberfläche vorzugsweise auch als Auflagefläche einer nachfolgend über die Beschichtungsoberfläche konzentrisch übergeschobenen und/oder aufgepressten drucktragenden Struktur. Eventuelle Überdrücke im Innenrohr werden vorzugsweise überwiegend durch diese Struktur mechanisch aufgefangen, das darunter angeordnete geschlitzte Innenrohr und die Beschichtung in vorteilhafter Weise entlastet. Die Drucktragende Struktur ist vorzugsweise ein nahtloses Rohr mit einem Innendurchmesser, der größer oder gleich dem Außendurchmesser der zylindrischen Beschichtungsoberfläche ist.

Vorzugsweise endet die drucktragende Struktur oder das nahtloses Rohr und das Innenrohr und die Beschichtung zumindest an einer Stirnseite, vorzugsweise an beiden Stirnseiten axial an gleicher Position; sie bilden weiter bevorzugt dann eine bzw. zwei gemeinsame Stirnseite(n).

Ist die drucktragende Struktur, vorzugsweise ein nahtloses Rohr, über die Beschichtungsoberfläche geschoben, wird vorzugsweise vorgeschlagen, deren Stirnseiten mit dem Innenrohr vorzugsweise im Vakuum zu verschweißen. Zwischen Innenrohr und drucktragender Struktur oder nahtlosem Rohr entsteht ein abgeschlossenes Innenraumvolumen. Durch ein bevorzugt heißisostatisches Verpressen des nahtlosen Rohres mit der Beschichtungsoberfläche setzt sich eine diffusionsgetriebene stoffliche Umlagerung wie z.B. ein Diffusionsverschweißen oder eine Sinterung in Gang, was zu einer Verdichtung und/oder stoffschlüssigen Verbindung zwischen Beschichtungsoberfläche mit der darüber angeordneten Innenfläche der drucktragenden Struktur führt.

Die Lösung der Aufgabe umfasst ferner ein **Rohr** mit einem Innenrohr mit innen an der Innenwandung angeordneten topographischen Strukturen und einer auf dem Innenrohr aufgesetzten Beschichtung. Das Innenrohr wird dabei durch mindestens zwei Rohrschalensegmente mit jeweils einer Innenwandung und einer Außenwandung, die passgenau mit Ihren vorzugsweise umlaufenden Stoßflächen und vorzugsweise ohne weitere Deformation unter Bildung von Stoßlinien zu einem Rohrabschnitt aneinandergesetzt sind, gebildet. An den Innenwandungen der Rohrschalensegmente sind topographische Strukturen angeordnet. Die Beschichtung besteht aus einem metallischen Material und ist auf der Außenwandung der Rohrschalensegmente über die Stoßflächen hinweg aufgebracht und bildet eine nach außen weisende Beschichtungsoberfläche. Das Rohr wird vorzugsweise nach dem vorgenannten Verfahren hergestellt. Die Rohrschalensegmente sind dabei bevorzugt aus einem Metall, weiter bevorzugt aus Stahl, einer Eisenbasislegierung oder einer Nickelbasislegierung. Nickelbasislegierungen zeichnen sich insbesondere durch eine ausgeprägte Korrosionsbeständigkeit und erhöhte Temperaturbeständigkeit aus, was insbesondere bei einem Einsatz in Receivern vorteilhaft ist.

Die Erfindung wird anhand von nachfolgenden Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden, solange sie im Rahmen der beigefügten Ansprüche bleiben. Es zeigen
**Fig.1a** **bis i** schematische Darstellungen des Verfahrens und des Rohrs eines ersten Ausführungsbeispiels mit perspektivischer Ansichten der Zwischenprodukte,
**Fig.2a** **und b** schematische Darstellungen eines zweiten Ausführungsbeispiels mit alternativen Ausgestaltungen der Rohrsschalensegmente, der topograpischen Strukturen und der Fixierungselemente,
**Fig.3a** **bis e** eine Ausführungsform des Rohrs in mehreren Ansichten und Schnittdarstellungen, bei der die Rohrschalensegmente durch kurze ringförmige Innenrohrabschnitte gebildet sind sowie
**Fig.4a** **und b** eine weitere Ausführungsform des Rohrs, bei der die Rohrschalensegmente durch ringförmige Innenrohrabschnitte gebildet sind.

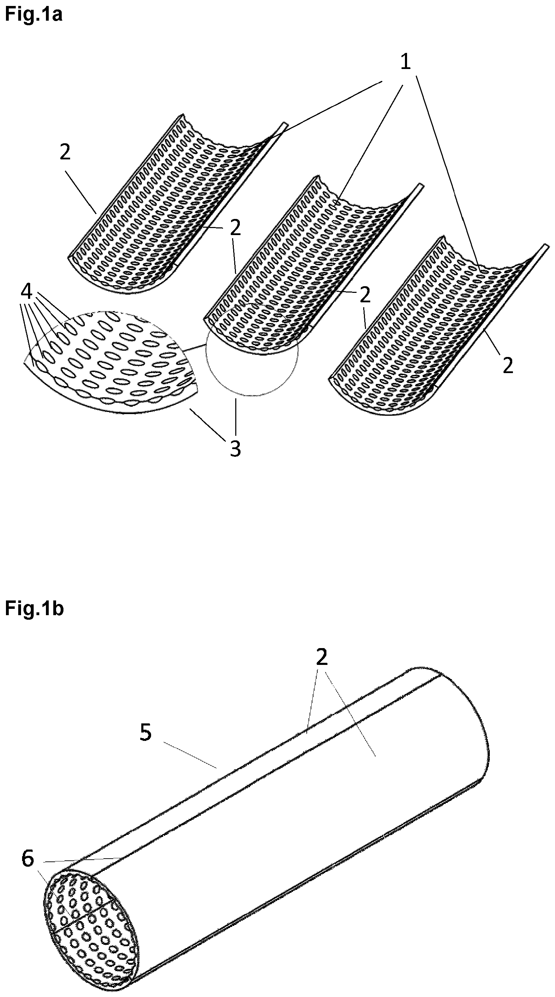

Das Verfahren zur Herstellung eines Rohrs eines ersten Ausführungsbeispiels sowie Ausgestaltungen dieses zeigen **Fig.1a** **bis i.** Dargestellt werden die Verfahrensschritte anhand von Zwischenprodukte.

**Fig.1a** repräsentiert die ersten Verfahrensschritte, der Bereitstellung von mindestens zwei, dargestellt drei gleiche und in Endkontur vorgebogenen Rohrschalensegmenten **1** mit jeweils einer Innenwandung, einer Außenwandung und einer umlaufenden Stoßfläche **2,** die passgenau unter Ausbildung des Innenrohrs aneinander setzbar sind. An den Innenwandungen wurden, hervorgehoben durch eine schematische Darstellung in der Detailansicht **3,** topographische Strukturen **4** auf- oder eingebracht.

Wie dargestellt sind die topographischen Strukturen auf den Innenwandungen verteilt, d.h. insbesondere auch abseits der Stoßflächen angeordnet.

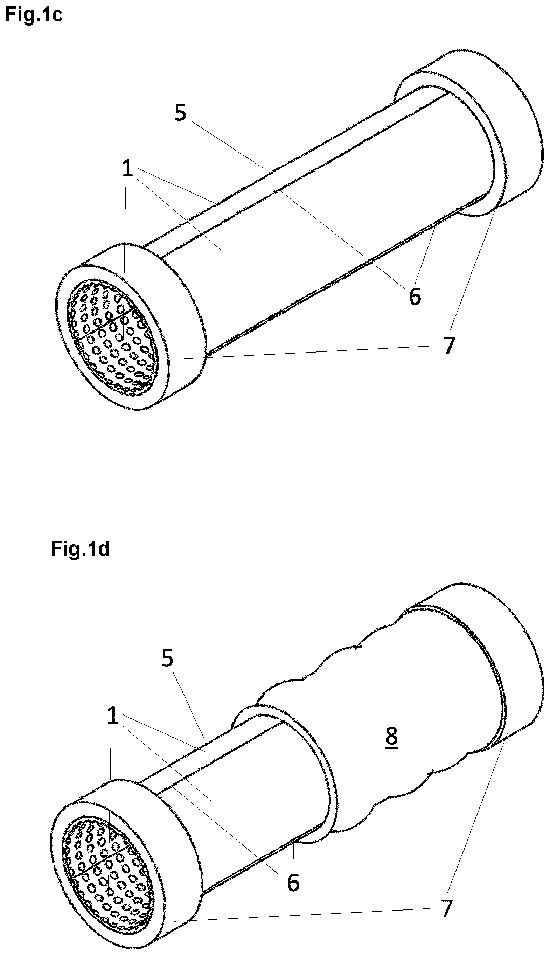

Anschließend werden in einem zweiten Verfahrensschritt die vorgenannten Rohrschalensegmente **1** über die Stoßflächen zu dem Innenrohr **5** unter Bildung von Stoßlinien **6** zusammengesetzt. **Fig.1b** zeigt das zusammengesetzte Innenrohr, wobei die im Innenrohr eingebundenen Rohrschalensegmente anschließend durch Ansetzen von Fixierungsmitteln **7** im Beispiel durch um die Innenrohrenden greifenden Schellen fixiert werden **(****Fig.1c****).** Wie dargestellt sind die Fixierungsmittel vorzugsweise nur außen auf dem Innenrohr aufgesetzt und bilden keine topographischen Strukturen auf den Innenwandungen.

Die Verbindung zwischen den einzelnen Rohrsegmenten 1 erfolgt per Materialauftrag, im Beispiel durch Additives Aufbringen der Beschichtung **8** aus einem metallischen Material auf der Außenwandung der Rohrschalensegmente **1** über die Stoßlinien **6** hinweg zu einem zusammenhängenden Rohrkörper. **Fig.1d** repräsentiert diesen Verfahrensschritt vor seinem Abschluss, d.h. mit nur teilweise zwischen den beiden Fixierungsmitteln **7** über das Innenrohr **5** die Stoßlinien **6** überbrückender aufgetragener Beschichtung **8.** Wie dargestellt überdeckt die Beschichtung vorzugsweise nicht die Fixierungsmittel.

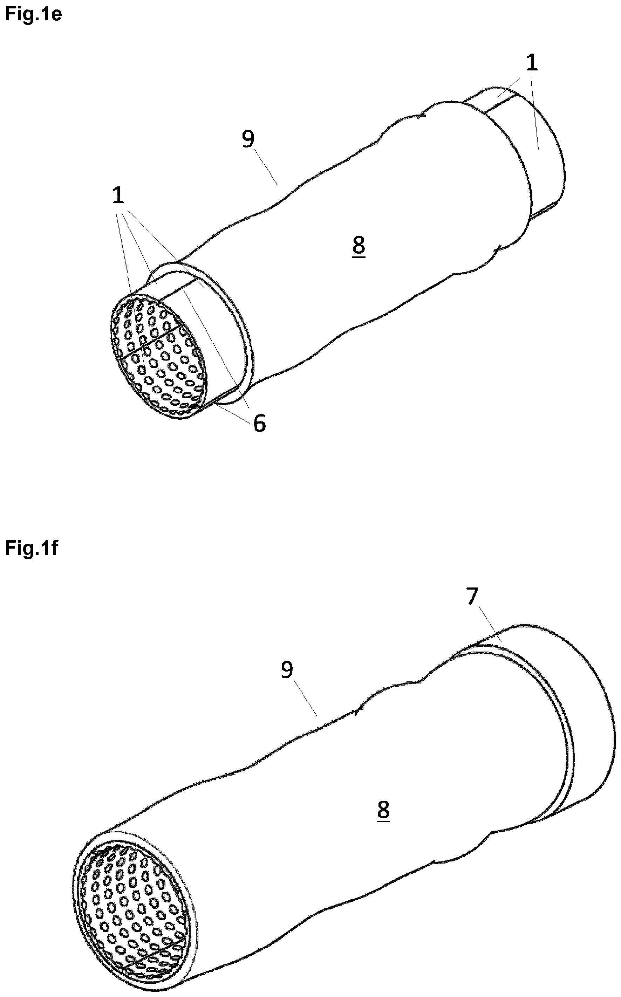

Zwischen Innenrohr **5** und den Fixierungsmitteln **7** befinden sich keine Beschichtungsanteile, wie nach einer optionalen Abnahme der Fixierungsmittel vom ansonsten beschichteten Innenrohr in **Fig.1e** erkennbar ist. Allein durch die Entfernung der Fixierungsmittel werden die bis dahin überdeckten Bereiche der Außenwandungen freigegeben. Aus dem Innenrohr und der Beschichtung entsteht ein zusammenhängender Rohrkörper **9.**

**Fig.1f** zeigt bespielhaft einen Rohrkörper **9,** bei dem an einem Ende die Beschichtung **8** an einem Rohrende über die von einem entfernten Fixierungsmittel freigegebene Außenwandung des Innenrohrs erstreckt. Am anderen Ende ist zur Verdeutlichung der Position noch ein Fixierungsmittel **7** über dem Innenrohr angeordnet. Zur Reduzierung des Rüstvorgangs wird aber vorzugsweise vorgeschlagen, für eine vorgesehene Beschichtung über die ganze Länge des Rohrkörpers alle Fixierungselemente zugleich - sofern nicht Stabilitätsgründe dagegensprechen- vom Innenrohr abzunehmen (vgl. **Fig.1e****).**

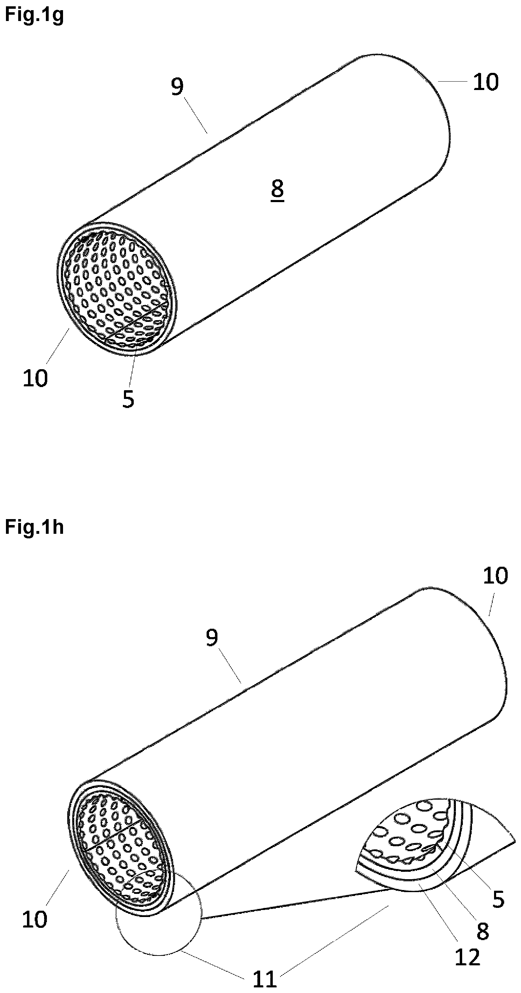

**Fig.1g** repräsentiert nachfolgende bevorzugte Verfahrensschritte, bei denen die gesamte Länge des Rohrköpers **9** erstreckende Beschichtung **8** und/oder die Stirnseiten **10** des Innenrohrs **5** mit der Beschichtung **8** einer mechanischen Nachbearbeitung unterzogen werden. Die mechanische Nachbearbeitung umfasst ein oder besteht aus einem weiter bevorzugt spangebendes bzw. spangebenden Überarbeiten, vorzugsweise ein Überdrehen oder Überschleifen. Ziel ist es, einerseits die Beschichtungsoberfläche in eine rotationssymmetrische konzentrisch zum Innenrohr angeordnete Form, vorzugsweise mit einer einheitlichen Schichtdicke oder Außendurchmesser zu überführen, andererseits die Stirnseiten von Innenrohr und Beschichtung unter Ausbildung jeweils einer Stirnfläche einheitlich abzulängen.

In einem optionalen weiteren Verfahrensschritt erfolgt ein konzentrisches Überschieben oder Aufpressen (ggf. Aufschrumpfen unter Nutzung von thermischen Ausdehnungseffekten) eines einer drucktragenden Struktur über die Beschichtungsoberfläche der Beschichtung **8,** wobei weiter bevorzugt die drucktragende Struktur ein nahtloses Rohr **12** mit einem Innendurchmesser und die Beschichtungsoberfläche zylindrisch mit einem Durchmesser kleiner oder gleich dem Innendurchmesser (bzw. bei Anwendung von Aufschrumpfen zur Erzeugung eines Presssitzes ggf. auch geringfügig größer) ist (vgl. **Fig.1h****).** Wie in der Detailansicht **11** dargestellt, liegen Innenrohr **5,** Beschichtung **8** und nachtloses Rohr **12** dann konzentrisch übereinander und bilden eine Schichtfolge.

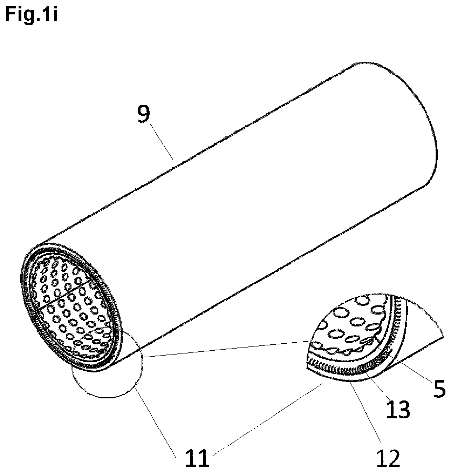

In einem nachfolgenden optionalen weiteren Schritt wird diese Schichtfolge vorzugsweise stoffschlüssig miteinander verbunden, wobei ein einem ersten Teilschritt vorzugsweise ein stirnseitiges Verschweißen des nahtlosen Rohres mit der Beschichtungsoberfläche vorgeschlagen wird. Eine weitere Schweißung an der gegenüber liegenden Stirnseite im Vakuum ausgeführt bildet ein abgeschlossenes Innenraumvolumen mit Vakuum darin (bzw. eine geschlossene Kontaktfläche bei Anwendung von Aufschrumpfen). **Fig.1i** zeigt in einer Detailansicht **11** einer Stirnseite eine auf der Stirnfläche umlaufenden Schweißnaht **13,** die das Innenrohr **5** bei Überbrückung der Beschichtung mit dem nahtlosen Rohr **12** dichtend verbindet.

Es folgt ein heißisostatisches Verpressen (HIP) des nahtlosen Rohres mit der Beschichtungsoberfläche, wobei das Innenrohr und das nahtlose Rohr vom anliegenden Druck zusammengedrückt wird. Die einstellbare Temperatur liegt vorzugsweise zwischen der Sinter- und der Schmelztemperatur des metallischen Materials der Beschichtung, vorzugsweise zwischen dem 0,7- und 1,0-fachen Schmelztemperatur. Bei dieser Temperatur erfolgt Oberflächendiffusion, d.h. ein diffusionsgetriebener Materialtransport und damit eine weitere Verdichtung in der Beschichtung. Andererseits erfolgt damit durch Materialumlagerung eine stoffliche Verbindung insbesondere zwischen der Beschichtungsoberfläche und dem darüber angeordneten nahtlosen Rohr.

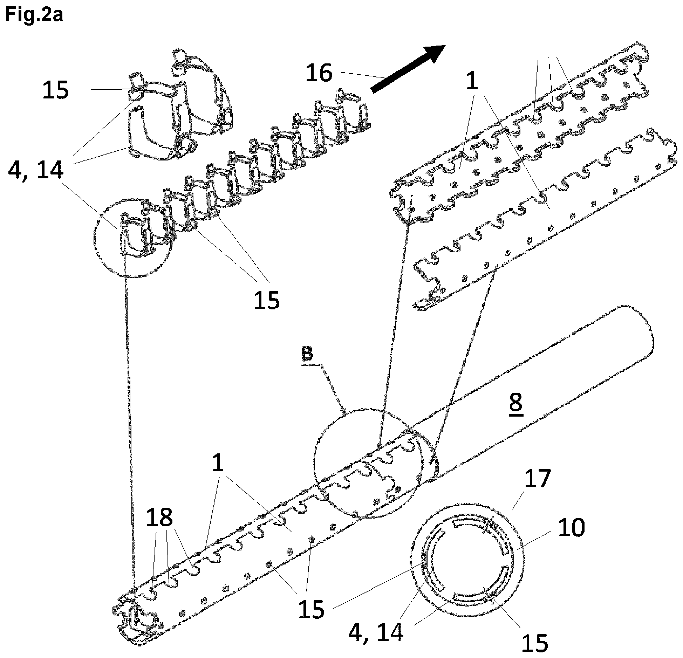

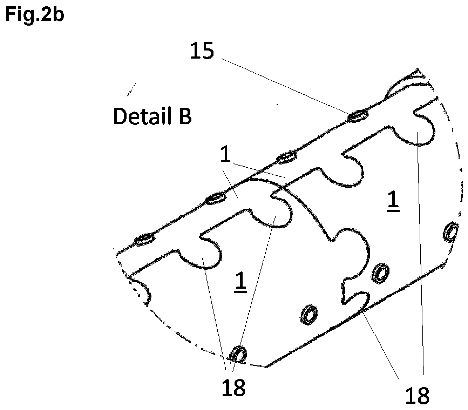

**Fig.2a** und die Detailzeichnung **Fig.2b** zeigen eine alternative bevorzugte Ausgestaltung folgender Details:
- Die topographischen Strukturen auf der Innenwandung der Rohrschalensegmente sind auf die Innenwandung aufgesetzte Strömungsleitbleche **14,** die über umlaufend angeordnete Nuten **15** gegen Anschlägen entsprechend einer späteren Durchströmungsrichtung **16** angeordnet positioniert werden. Diese Strömungsleitbleche bieten in vorteilhafter Weise eine vergleichsweise große spezifische Oberfläche für eine Wärmeübertagung an. Außerdem dienen sie der Strömungsleitung und -stabilisierung einer durch das Innenrohr durchleitbare Fluidströmung im Bereich der Innenwandung, d.h. - wie im Querschnitt **17** in **Fig.2a** besonders deutlich erkennbar - gerade in den randnahen Bereichen, in denen sich bevorzugt eine wärmdämmende Strömungsgrenzschicht ausbildet.
- Sofern die Stoßflächen der Rohrschalensegmente **1** als ineinandergreifende Formelemente **18** ausgestaltet sind, ermöglichen sie in besonders vorteilhafter Weise ein Zusammensetzen der Rohrschalensegmente wie bei einem Puzzle. Sie sind je nach Ausgestaltung auch als Fixierungselemente oder zumindest als die Fixierungselemente unterstützende Gestaltung heranziehbar. Besonders vorteilhaft ist diese Ausgestaltung auch dann, wenn das Innenrohr sich wie abgebildet aus mehreren sowohl axial als auch in Umfangsrichtung, d.h. tangential hintereinander angeordneten Rohrschalensegmenten zusammensetzen.
- Die einzelnen Rohrschalensegmente sind mit den vorgenannten Formelementen zumindest temporär über eine geeignete Vorrichtung (in **Fig.2a** **und b** nicht dargestellt) gegeneinander über Innenkonus und Aussenkonus positionierbar und mit definiertem Druck gegeneinander in axialer Richtung während dem Materialauftrag unter Rotation um die Hauptachse mittels Kaltgasspritzen fixierbar.

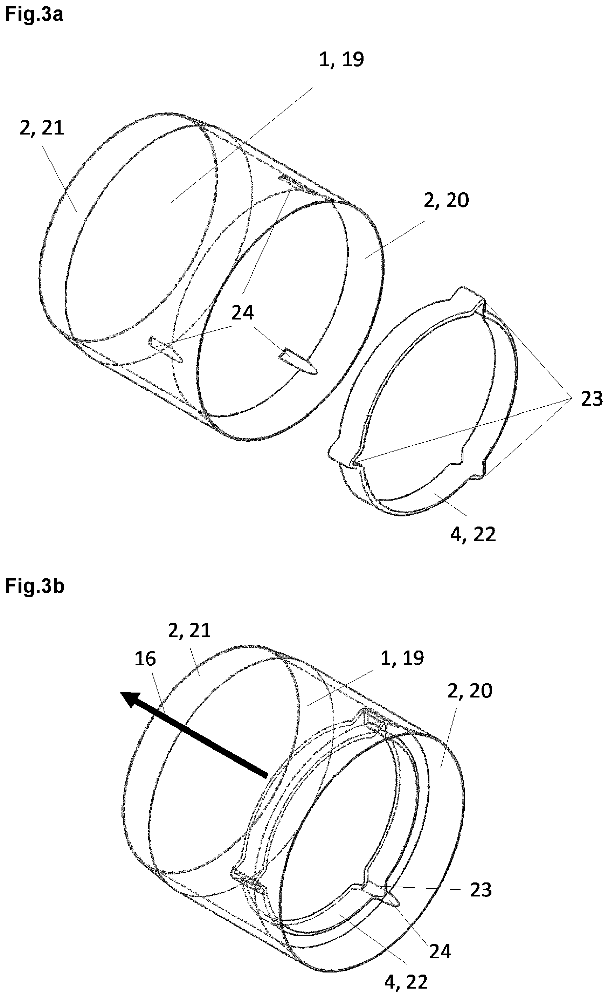

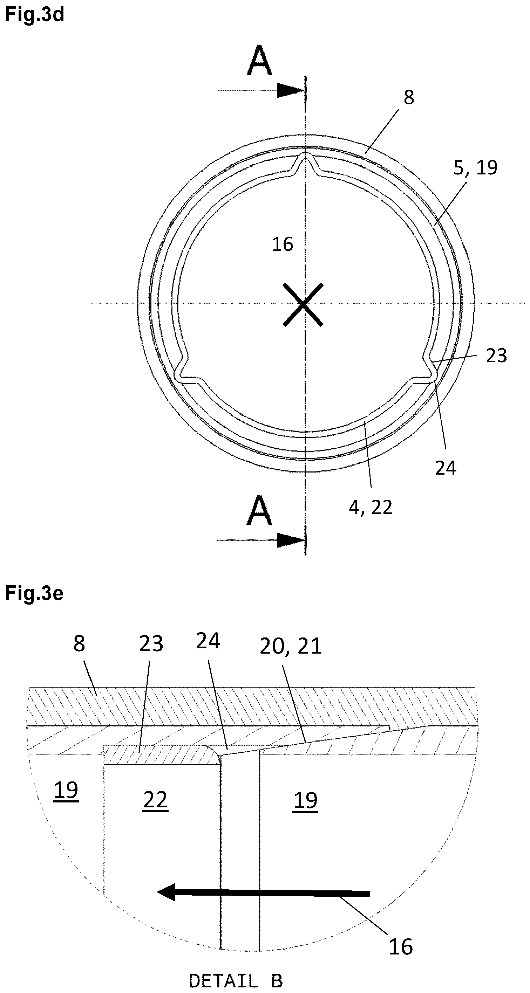

**Fig.3a** **bis e** zeigen eine alternative Ausführungsform, bei denen die Rohrschalensegmente **1** durch ringförmige Innenrohrabschnitte **19** gebildet sind.

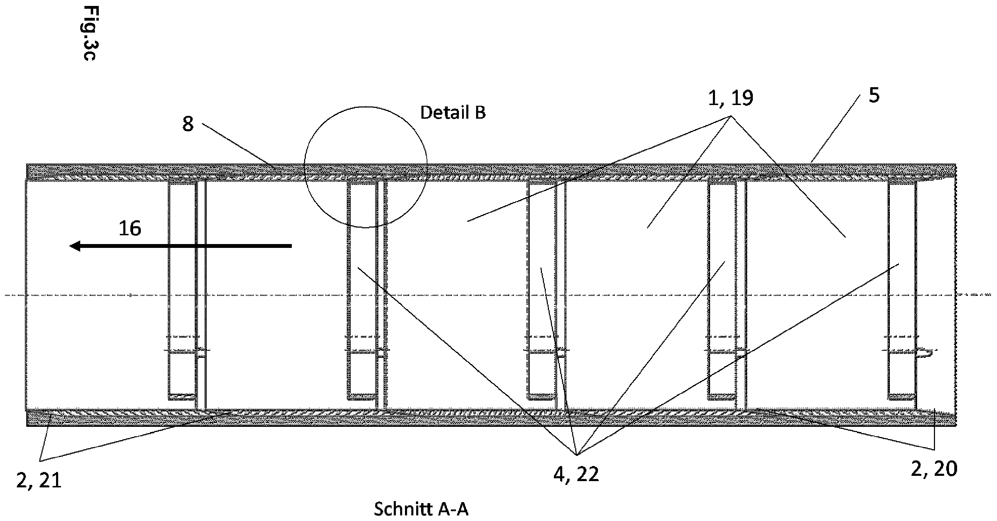

**Fig.3a** zeigt einen einzelnen Innenrohrabschnitt mit zwei endseitig angeordneten ringförmigen Stoßflächen **2,** jeweils einem Innenkonus **20** und einem Außenkonus **21,** die bei einem seriellen Aneinandersetzen mehrerer Innenrohrabschnitte formschlüssig zu den jeweils benachbarten Außen- bzw. Innenkonus zusammenpassen und jeweils umlaufende Stoßlinien bilden (vgl. **Fig.3b** **bis d**). Ferner ist ein ringförmiges Strömungsleitblech **22** mit Abstandshalter **23** vorgesehen, das formschlüssig in entsprechende Aufnahmenuten **24** auf der Innenwandung des Innenrohrabschnitts **19** einsetzbar ist (vgl. **Fig.3b** **bis e**) und durch ein Andocken eines benachbarten Innenrohrabschnitts gegen ein axiales Herauslösen aus seiner Position gesichert wird (vgl. **Fig.3c** **und e**). Die axial in Reihe angeordneten Innenrohrabschnitte bilden in ihrer zusammengesetzten Gesamtheit das Innenrohr **5.** **Fig.3c** **und e** zeigen zudem eine die Stoßlinien **6** überbrückende Beschichtung auf dem Innenrohr.

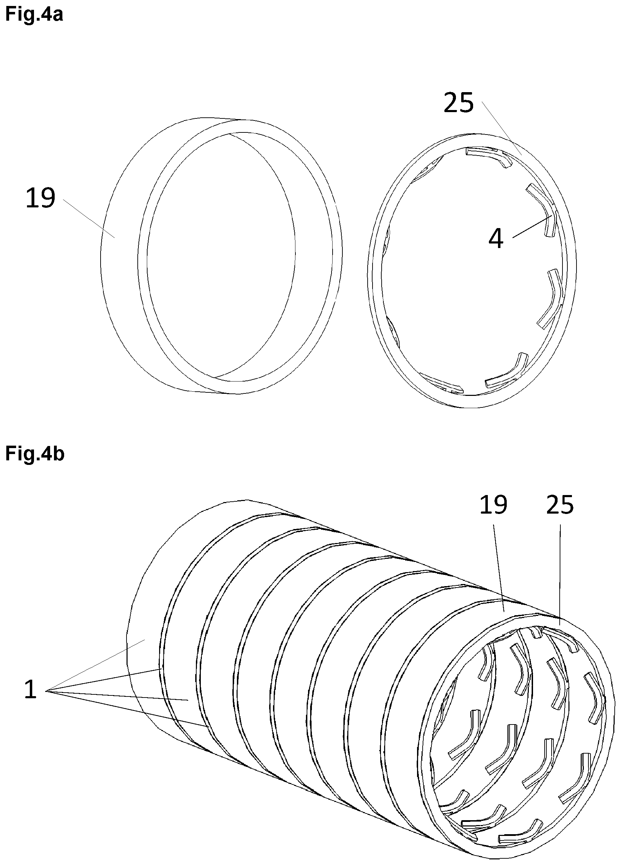

Auch in **Fig.4a** **und b** wird eine weitere Ausführungsform, bei denen die Rohrschalensegmente **1** durch ringförmige Innenrohrabschnitte gebildet sind. Dabei werden die in **Fig.4a** dargestellten Blechringe **25** mit nach innen angeformten topographischen Blechstrukturen **4** abwechselnd mit Innenrohrabschnitten **19** aneinandergereiht zu einem Innenrohr zusammengesetzt (vgl. **Fig.4b****),** wobei in die Blechringe vorzugsweise mit bevorzugt dichtenden und/oder zentrierenden Ausformungen für eine Aufnahme der angrenzenden Innenrohrabschnitte (Rohrelemente z.B. ohne Innenwandstrukturen) aufweist. Die Rohrschalensegmente werden somit durch die Blechstrukturen und die Innenrohrabschnitte gebildet.

Die Blechringe werden vorzugsweise mittels Strahltechnik (Laser oder EB) aus einem Blech geschnitten, z.B. wie folgt:
- Ausschneiden eines ebenen Blechringrohlings aus dem Blech
- Abschrägen, Stanzen, Biegen oder Prägen der Kante an der Innenseite des Blechringrohlings zu den topogrphischen Strukturen, z.B. von 3-dimensionalen Flügelstrukturen die zumindest auf einer Seite in axialer Richtung die Kontur der Innenwandung des späteren Innenrohrs überragen.
- Mechanisches abwechselndes Verbinden der vorgenannten Blechringe im Wechsel mit Innenrohrabschnitten ohne topographische Strukturen an der Innenseite, Auffädeln z.B. auf einem Dorn als Fixierungsmittel und verklemmen der endseitigen Innenrohrabschnitte gegeneinander
- Additives Aufbringen der Beschichtung aus einem metallischen Material auf der Außenwandung der Rohrschalensegmente über die Stoßlinien hinweg zu einem zusammenhängenden Rohrkörper

### Bezugszeichenliste:

- 1: Rohrschalensegmenten
- 2: Stoßfläche
- 3: Detailansicht
- 4: topographische Strukturen
- 5: Innenrohr
- 6: Stoßlinien
- 7: Fixierungsmittel
- 8: Beschichtung
- 9: Rohrköper
- 10: Stirnseite
- 11: Detailansicht
- 12: nahtloses Rohr
- 13: Schweißnaht
- 14: Strömungsleitbleche
- 15: Nut
- 16: Durchströmungsrichtung
- 17: Querschnitt
- 18: ineinandergreifende Formelemente
- 19: Innenrohrabschnitte
- 20: Innenkonus
- 21: Außenkonus
- 22: ringförmiges Strömungsleitblech
- 23: Abstandshalter
- 24: Aufnahmenuten
- 25: Blechring

## Patentansprüche

1. Verfahren zur Herstellung eines Rohrs, umfassend ein Innenrohr **(5)** mit innen angeordneten topgraphischen Strukturen **(4)** sowie eine auf dem Innennrohr außen angeordneten Beschichtung **(8),** umfassend die folgenden Verfahrensschritte:
a) Bereitstellung von mindestens zwei Rohrschalensegmenten **(1)** mit jeweils einer Innenwandung, einer Außenwandung und einer umlaufenden Stoßfläche **(2),** die passgenau unter Ausbildung des Innenrohrs aneinander setzbar sind,
b) Auf- oder Einbringen der topographischen Strukturen auf der Innenwandung der Rohrschalensegmente **(1),** wobei die Rohrschalensegmente **(1)** beim Auf- oder Einbringen der topographischen Strukturen **(4)** auf der Innenwandung bereits endkonturnah vorgeformt vorliegen und ohne weitere Verformung zum Innenrohr **(5)** unter Bildung von Stoßlinien **(6)** aneinandergesetzt werden.
c) Aneinandersetzen der Rohrschalensegmente **(1)** über die Stoßflächen zu dem Innenrohr unter Bildung von Stoßlinien **(6),**
d) Fixierung der im Innenrohr eingebundenen Rohrschalensegmente **(1)** durch Ansetzen von Fixierungsmitteln **(7)** sowie
e) Additives Aufbringen der Beschichtung **(8)** aus einem metallischen Material auf der Außenwandung der Rohrschalensegmente **(1)** über die Stoßlinien **(6)** hinweg zu einem zusammenhängenden Rohrkörper **(9).**

2. Verfahren nach Anspruch 1, **dadurch gekennzeichnet, dass** die Fixierungsmittel **(7)** über Bereiche der Außenwandungen der Rohrschalensegmente **(1)** angesetzt sind und diese Bereiche damit überdecken, umfassend die weiteren folgenden nachfolgenden Verfahrensschritte:
f) Entfernung der Fixierungsmittel, wobei die bis dahin überdeckten Bereiche der Außenwandungen freigegeben werden sowie
g) Additives Aufbringen des metallischen Materials in den Bereichen der Fixierungsmittel als Teil der Beschichtung **(8).**

3. Verfahren nach Anspruch 1 oder 2, umfassend eine nachfolgende thermische und/oder mechanische Nachbearbeitung der Beschichtung **(8)** und/oder der Stirnseiten **(10)** des Innenrohrs **(5)** mit der Beschichtung **(8).**

4. Verfahren nach Anspruch 3, **dadurch gekennzeichnet, dass** die mechanische Nachbearbeitung ein spangebendes Überarbeiten, vorzugsweise ein Überdrehen oder Überschleifen, der Beschichtung **(8)** umfasst, wobei eine rotationssymmetrische konzentrisch zum Rohr angeordnete Beschichtungsoberfläche entsteht.

5. Verfahren nach Anspruch 4, umfassend nachfolgend ein konzentrisches Überschieben oder Aufpressen einer drucktragenden Struktur über die Beschichtungsoberfläche.

6. Verfahren nach Anspruch 5, wobei die drucktragende Struktur ein nahtloses Rohr **(12)** mit einem Innendurchmesser größer oder gleich dem Durchmesser der Beschichtungsoberfläche ist, umfassend die weiteren folgenden nachfolgenden Verfahrensschritte:
h) Stirnseitiges Verschweißen des nahtlosen Rohres **(12)** mit der Beschichtungsoberfläche, der Beschichtung **(8)** und/ oder dem Innenrohr **(5)** vorzugsweise im Vakuum, wobei zwischen dem nahtlosen Rohr, der Beschichtungsoberfläche, der Beschichtung und/oder dem Innenrohr ein abgeschlossenes Innenraumvolumen entsteht, sowie
i) Heißisostatisches Verpressen des nahtlosen Rohres mit der Beschichtungsoberfläche.

7. Verfahren nach einem der vorgenannten Ansprüche, **dadurch gekennzeichnet, dass** das Auf- oder Einbringen der topographischen Strukturen **(4)** auf der Innenwandung der Rohrschalensegmente **(1)** mittels Urform-, Umform-, Trenn-, Füge-, Abtrags- oder Beschichtungsverfahren erfolgt.

8. Verfahren nach einem der vorgenannten Ansprüche, **dadurch gekennzeichnet, dass** die Fixierung zumindest jeweils an den Endbereichen des Innenrohrs **(5)** erfolgt.

9. Verfahren nach einem der vorgenannten Ansprüche, **dadurch gekennzeichnet, dass** die Fixierungsmittel **(7)** um das Innenrohr **(5)** umlaufende Schellen umfassen, die zur Fixierung der im Innenrohr eingebundenen Rohrschalensegmente um das Innenrohr angelegt werden und dieses vollständig umschließen.

10. Verfahren nach einem der vorgenannten Ansprüche, **dadurch gekennzeichnet, dass** das additive Aufbringen der Beschichtung **(8)** aus dem metallischen Material auf der Außenwandung mittels eines Auftragsschweißverfahrens erfolgt, wobei das metallische Material in Pulver- oder Drahtform bereitgestellt wird und durch eine Wärmequelle, vorzugsweise einem Energiestrahl oder einer Lichtbogenentladung, geschmolzen wird.

11. Verfahren nach einem der Ansprüche 1 bis 9, **dadurch gekennzeichnet, dass** das Aufbringen der Beschichtung **(8)** aus dem metallischen Material auf der Außenwandung mittels Kaltgasspritzen oder thermischen Spritzen erfolgt, wobei das metallische Material in Pulverform bereitgestellt wird.

12. Rohr mit an der Innenwandung angeordneten topgraphischen Strukturen **(4),** hergestellt mit einem Verfahren nach einem der vorgenannten Ansprüche, umfassend:
a) mindestens zwei Rohrschalensegmente **(1)** mit jeweils einer Innenwandung, einer Außenwandung und einer umlaufenden Stoßfläche **(2),** die passgenau unter Bildung von Stoßlinien **(6)** zu einem Rohrabschnitt aneinandergesetzt sind, wobei die Rohrschalensegmente **(1)** beim Auf- oder Einbringen der topographischen Strukturen **(4)** auf der Innenwandung bereits endkonturnah vorgeformt vorliegen und ohne weitere Verformung zum Innenrohr **(5)** unter Bildung von Stoßlinien **(6)** aneinandergesetzt werden, wobei die Rohrschalensegmente durch rinnenförmige Segmente gebildet werden, bei denen mehrere dieser Segmente axial parallel zueinander angeordnet zum Innenrohr oder einem Innenrohrabschnitt zusammengesetzt sind und/oder wobei die Rohrschalensegmente durch kurze ringförmige Innenrohrabschnitte gebildet werden, die dann axial seriell zueinander angeordnet zum Innenrohr oder einem Innenrohrabschnitt zusammengesetzt sind,
b) topographische Strukturen auf der Innenwandung der Rohrschalensegmente sowie
c) eine Beschichtung **(8)** aus einem metallischen Material auf der Außenwandung der Rohrschalensegmente über die Stoßlinien hinweg mit einer Beschichtungsoberfläche.

13. Rohr nach Anspruch 12, **dadurch gekennzeichnet, dass** die Rohrschalensegmente **(1)** aus Metall, vorzugsweise aus Stahl, einer Eisenbasislegierung oder Nickelbasiswerkstoffen, sind.

14. Rohr nach Anspruch 12 oder 13, **dadurch gekennzeichnet, dass** die Stoßflächen **(2)** formschlüssige Führungselemente oder überlappende Bereiche zu benachbarten Stoßflächen aufweisen.

15. Rohr nach einem der Ansprüche 12 bis 14, **dadurch gekennzeichnet, dass** über die Beschichtungsoberfläche eine drucktragende Struktur übergeschoben oder aufgepresst ist.

16. Rohr nach Anspruch 15, **dadurch gekennzeichnet, dass** die drucktragende Struktur ein nahtloses Rohr mit einem Innendurchmesser ist und die Beschichtungsoberfläche rotationssymmetrisch konzentrisch, vorzugsweise zylindrisch, um das Innenrohr **(5)** mit einem Durchmesser kleiner oder gleich dem Innendurchmesser ausgestaltet ist.

17. Rohr nach einem der Ansprüche 12 bis 16, **dadurch gekennzeichnet, dass** die Rohrschalensegmente **(1)** Ringelemente **(19)** sind, die über die Stoßflächen **(2, 20, 21)** hintereinander zum Innenrohr aneinander setzbar sind.

## Claims

1. Method for producing a pipe having an inner pipe (5) with topographic structures (4) arranged on the inside and having a coating (8) arranged on the outside of the inner pipe, comprising the following steps:
a) providing at least two pipe shell segments (1), each having an inner wall, an outer wall and a peripheral abutment surface (2), which can be fitted together in an accurately fitting manner to form the inner pipe,
b) mounting or introducing the topographic structures onto or into the inner wall of the pipe shell segments (1), wherein the pipe shell segments (1) are already preformed to a shape close to their final contours when the topographic structures (4) are mounted onto or introduced into the inner wall, and are fitted together without further deformation to form the inner pipe (5), with the formation of abutment lines (6),
c) fitting the pipe shell segments (1) together via the abutment surfaces to form the inner pipe with the formation of abutment lines (6),
d) fixing the pipe shell segments (1) incorporated into the inner pipe by attaching fixing means (7), and
e) additively applying the coating (8) consisting of a metallic material to the outer wall of the pipe shell segments (1) over the abutment lines (6) to form a continuous pipe body (9).

2. Method according to claim 1, **characterised in that** the fixing means (7) is attached over regions of the outer walls of the pipe shell segments (1) and thereby covers those regions, further comprising the following subsequent steps:
f) removing the fixing means, whereby the previously covered regions of the outer walls are exposed, and
g) additively applying the metallic material in the regions of the fixing means as part of the coating (8).

3. Method according to claim 1 or 2, comprising subsequent thermal and/or mechanical post-treatment of the coating (8) and/or the end faces (10) of the inner pipe (5) with the coating (8).

4. Method according to claim 3, **characterised in that** the mechanical post-treatment comprises subtractive machining, preferably turning or grinding, of the coating (8), thereby producing a rotationally symmetrical coating surface arranged concentrically with respect to the pipe.

5. Method according to claim 4, subsequently comprising a concentric sliding or pressing of a pressure-bearing structure over the coating surface.

6. Method according to claim 5, wherein the pressure-bearing structure is a seamless pipe (12) with an internal diameter greater than or equal to the diameter of the coating surface, comprising the following further steps:
h) end-face welding of the seamless pipe (12) with the coating surface, the coating (8) and/or the inner pipe (5), preferably under vacuum, thereby creating a sealed internal volume between the seamless pipe, the coating surface, the coating and/or the inner pipe, and
i) hot isostatic pressing of the seamless pipe with the coating surface.

7. Method according to any of the preceding claims, **characterised in that** the topographic structures (4) are mounted onto or introduced into the inner wall of the pipe shell segments (1) by means of casting, reshaping, cutting, joining, abrading or coating processes.

8. Method according to any of the preceding claims, **characterised in that** fixing takes place at least at the end regions of the inner pipe (5).

9. Method according to any of the preceding claims, **characterised in that** the fixing means (7) comprises clamps encircling the inner pipe (5), which are applied around the inner pipe to fix the pipe shell segments incorporated into the inner pipe and completely enclose the same.

10. Method according to any of the preceding claims, **characterised in that** the additive application of the coating (8) consisting of a metallic material on the outer wall is carried out by means of a deposition welding process, wherein the metallic material is provided in powder or wire form and is melted by a heat source, preferably an energy beam or arc discharge.

11. Method according to any of claims 1 to 9, **characterised in that** the application of the coating (8) consisting of a metallic material on the outer wall is carried out by means of cold gas spraying or thermal spraying, wherein the metallic material is provided in powder form.

12. Pipe having topographic structures (4) arranged on the inner wall, produced by a method according to any of the preceding claims, comprising:
a) at least two pipe shell segments (1), each having an inner wall, an outer wall and a peripheral abutment surface (2), which can be fitted together in an accurately fitting manner to form a pipe section with the formation of abutment lines (6), wherein the pipe shell segments (1) are already preformed to a shape close to their final contours when the topographic structures (4) are mounted onto or introduced into the inner wall and are fitted together without further deformation to form the inner pipe (5) with the formation of abutment lines (6), wherein the pipe shell segments are formed by trough-shaped segments in which a plurality of these segments are arranged axially parallel to one another and assembled to form the inner pipe or an inner pipe section, and/or wherein the pipe shell segments are formed by short annular inner pipe sections which are then arranged axially in series with one another and assembled to form the inner pipe or an inner pipe section,
b) topographic structures on the inner wall of the pipe shell segments, and
c) a coating (8) consisting of a metallic material on the outer wall of the pipe shell segments over the abutment lines with a coating surface.

13. Pipe according to claim 12, **characterised in that** the pipe shell segments (1) are made of metal, preferably steel, an iron-based alloy or nickel-based materials.

14. Pipe according to claim 12 or 13, **characterised in that** the abutment surfaces (2) comprise form-fitting guide elements or regions overlapping with adjacent abutment surfaces.

15. Pipe according to any of claims 12 to 14, **characterised in that** a pressure-bearing structure is slid over or pressed onto the coating surface.

16. Pipe according to claim 15, **characterised in that** the pressure-bearing structure is a seamless pipe with an internal diameter, and the coating surface is arranged rotationsymmetrically, concentrically and preferably cylindrically around the inner pipe (5), with a diameter less than or equal to the internal diameter.

17. Pipe according to any of claims 12 to 16, **characterised in that** the pipe shell segments (1) are ring elements (19) which can be fitted one after the other to the inner pipe via the abutment surfaces (2, 20, 21).

## Revendications

1. Procédé de fabrication d'un tuyau, comprenant un tuyau (5) intérieur ayant des structures (4) topographiques disposées à l'intérieur ainsi qu'un revêtement (8) disposé à l'extérieur sur le tuyau intérieur, comprenant les stades de procédés suivants :
a) se procurer au moins deux segments (1) d'enveloppe tubulaire ayant chacun une paroi intérieure, une paroi extérieure et une surface (2) de joint faisant le tour, lesquels peuvent être mis en s'adaptant exactement les uns à côté des autres, avec formation du tuyau intérieur,
b) dépôt ou introduction des structures topographiques sur la paroi intérieure des segments (1) d'enveloppe tubulaire, dans lequel les segments (1) d'enveloppe tubulaire se présentent, lors du dépôt ou de l'introduction des structures (4) topographiques sur la paroi intérieure, déjà préformés, en étant proches du contour final et sont mis les uns à côté des autres sans autre déformation par rapport au tuyau (5) intérieure avec formation de lignes (6) de joint,
c) mettre les uns à côté des autres, les segments (1) d'enveloppe tubulaire par les surfaces de joint sur le tube intérieur avec formation de lignes (6) de joint,
d) fixer les segments (1) d'enveloppe tubulaire intégrés dans le tuyau intérieur par mise en place de moyens (7) de fixation ainsi que
e) dépôt supplémentaire du revêtement (8) en un matériau métallique sur la paroi extérieure des segments (1) d'enveloppe tubulaire au-dessus des lignes (6) de joint pour donner un corps (9) de tuyau d'un seul tenant.

2. Procédé suivant la revendication 1, **caractérisé en ce que** les moyens (7) de fixation sont mis sur des parties des parois extérieures des segments (1) d'enveloppe tubulaire et recouvrent ainsi ces parties, comprenant les stades de procédé supplémentaires suivants, successifs :
f) enlèvement des moyens de fixation, les parties recouvertes jusqu'ici des parois extérieures étant libérées ainsi que
g) dépôt supplémentaire de la matière métallique dans les parties des moyens de fixation comme partie du revêtement (8).

3. Procédé suivant la revendication 1 ou 2, comprenant un post-traitement thermique et/ou mécanique du revêtement (8) et/ou des côtés (10) frontaux du tuyau (5) intérieur ayant le revêtement (8).

4. Procédé suivant la revendication 3, **caractérisé en ce que** le post-traitement mécanique comprend un retouchage avec enlèvement de copeaux, de préférence, un retournage ou un rerectifiage du revêtement (8), avec création d'une surface de revêtement de révolution concentrique au tuyau.

5. Procédé suivant la revendication 4, comprenant ensuite un glissement concentrique ou une pression d'une structure supportant la pression sur la surface du revêtement.

6. Procédé suivant la revendication 5, dans lequel la structure supportant la pression est un tuyau (12) sans soudure d'un diamètre intérieur supérieur ou égal au diamètre de la surface du revêtement, comprenant les autres stades de procédés suivants, successifs :
h) soudure du côté frontale du tuyau (12) sans soudure à la surface du revêtement, au revêtement (8) et/ou au tuyau (5) intérieur de préférence sous vide, dans lequel entre le tuyau sans soudure, la surface du revêtement, le revêtement et/ou le tuyau intérieur se crée un volume d'espace intérieur fermé ainsi que
i) compression isostatique à chaud du tuyau sans soudure avec la surface du revêtement.

7. Procédé suivant l'une des revendications précédentes, **caractérisé en ce que** le dépôt et l'introduction des structures (4) topographiques sur la paroi intérieure des segments (1) d'enveloppe tubulaire s'effectuent au moyen d'un procédé par forme d'origine par formage, par séparation, par assemblage, par enlèvement de matière ou par revêtement.

8. Procédé suivant l'une des revendications précédentes, **caractérisé en ce que** la fixation s'effectue au moins respectivement sur les parties d'extrémité du tuyau (5) intérieur.

9. Procédé suivant l'une des revendications précédentes, **caractérisé en ce que** les moyens (7) de fixation comprennent des colliers entourant le tuyau (5) intérieur qui, pour la fixation des segments d'enveloppe annulaire introduits dans le tuyau intérieur, sont appliqués sur le tuyau intérieur et l'entourent complètement.

10. Procédé suivant l'une des revendications précédentes, **caractérisé en ce que** le dépôt supplémentaire du revêtement (8) en matériau métallique sur la paroi extérieure s'effectue au moyen d'un procédé de soudage avec apport, dans lequel on met à disposition le matériau métallique sous forme de poudre ou de fil et on le fond par une source de chaleur, de préférence par un faisceau d'énergie ou une décharge électrique.

11. Procédé suivant l'une des revendications 1 à 9, **caractérisé en ce que** le dépôt du revêtement (8) en matériau métallique sur la paroi extérieure s'effectue au moyen d'une pulvérisation au gaz froid, d'une pulvérisation thermique, le matériau métallique étant sous forme pulvérulente.

12. Tuyau comprenant des structures (4) topographiques disposées sur la paroi intérieure, fabriqué par un procédé suivant l'une des revendications précédentes, comprenant :
a) au moins deux segments (1) d'enveloppe tubulaire ayant chacune une paroi intérieure, une paroi extérieure et une surface (2) de joint faisant le tour, qui sont mises avec une précision d'adaptation l'une à côté de l'autre, avec formation de lignes (6) de joint, sur un tronçon de tuyau, dans lequel les segments (1) d'enveloppe de tuyau se présentent, lors du dépôt ou de l'introduction des structures (4) topographiques sur la paroi intérieure, déjà préformés, en étant proches du contour final et sont mis les uns à côté des autres sans autre déformation par rapport au tuyau (5) intérieure avec formation de lignes (6) de joint, dans lequel les segments d'enveloppe de tuyau sont formés par des segments en forme de goulottes, dans lesquelles plusieurs de ces segments sont rassemblés en étant disposés entre eux parallèlement à l'axe du tuyau intérieur ou d'un tronçon du tuyau intérieur et/ou dans lequel les segments d'enveloppe de tuyau sont formés par de courts tronçons de tuyau intérieur de forme annulaire, qui sont alors rassemblés en étant disposés entre eux en série axialement sur le tuyau intérieur ou sur un tronçon de tuyau intérieur,
b) des structures topographiques sur la paroi intérieure des segments d'enveloppe de tuyau ainsi que
c) un revêtement (8) en un matériau métallique sur la paroi extérieure des segments d'enveloppe de tuyau au des lignes de joint en ayant une surface de revêtement.

13. Tuyau suivant la revendication 12, **caractérisé en ce que** les segments (1) d'enveloppe tuyau sont en métal, de préférence, en acier, en un alliage à base de fer ou en des matériaux à base de nickel.

14. Tuyau suivant la revendication 12 ou 13, **caractérisé en ce que** les surfaces (2) de joint ont des éléments de guidage par la forme ou des parties à chevauchement avec des surfaces de joint voisines.

15. Tuyau suivant l'une des revendications 12 à 14, **caractérisé en ce que** sur la surface de revêtement est glissée ou pressée une structure supportant la pression.

16. Tuyau suivant la revendication 15, **caractérisé en ce que** la structure supportant la pression est un tuyau sans soudure d'un diamètre intérieur et la surface de revêtement est conformée concentriquement de révolution, en étant de préférence cylindrique, autour du tuyau (5) intérieur, en ayant un diamètre inférieur ou égal au diamètre intérieur.

17. Tuyau suivant l'une des revendications 12 à 16, **caractérisé en ce que** les segments (1) d'enveloppe tubulaire sont des éléments (19) annulaires, qui sont mis par les surfaces (2, 20, 21) de joint les uns derrière les autres sur le tuyau intérieur.
